# EUROPÄISCHE PATENTSCHRIFT

(11) **EP 4 347 333 B1**
(45) Veröffentlichungstag und Bekanntmachung des Hinweises auf die Patenterteilung: **17.06.2026**
(21) Anmeldenummer: 22730494.6
(22) Anmeldetag: 25.05.2022
(51) Int. Cl.: B60T 8/17, B60T 8/1755, B60T 8/24

(54) **VERFAHREN UND ELEKTRONISCHES STEUERGERÄT ZUR STEUERUNG EINER BREMSANLAGE EINES KRAFTFAHRZEUGS**
METHOD AND ELECTRONIC CONTROL DEVICE FOR CONTROLLING A BRAKING SYSTEM OF A MOTOR VEHICLE
PROCÉDÉ ET APPAREIL DE COMMANDE ÉLECTRONIQUE POUR LA COMMANDE D'UN SYSTÈME DE FREINAGE D'UN VÉHICULE AUTOMOBILE

(30) Priorität: 02.06.2021 DE 102021114305
(43) Veröffentlichungstag der Anmeldung: 10.04.2024
(73) Patentinhaber: ZF CV Systems Europe BV, 1170 Brüssel (BE)
(72) Erfinder: FLAUM, Nikolai, 30457 Hannover (DE); WALLBAUM, Torsten, 31089 Duingen (DE)
(74) Vertreter: Schäferjohann, Volker
(86) Internationale Anmeldenummer: PCT/EP2022/064229
(87) Internationale Veröffentlichungsnummer: WO 2022/253674

(56) Entgegenhaltungen:
- WO-A1-03/008242
- WO-A1-2014/012609
- DE-A1- 102015 009 160

## Beschreibung

Die Erfindung betrifft ein Verfahren zur Steuerung einer Bremsanlage eines Kraftfahrzeugs, welche von einem elektronischen Steuergerät hinsichtlich deren Betätigung steuerbare Radbremsen sowie Steuerungseinrichtungen zur Ausführung einer Blockierschutzfunktion und zur Ausführung einer Kippschutzfunktion aufweist, wobei das Kraftfahrzeug bei einer Kurvenfahrt oder bei einer plötzlichen Ausweichbewegung aufgrund einer ermittelten Kippgefahr um die Kraftfahrzeuglängsachse durch eine Betätigung der Radbremsen abgebremst wird. Die Erfindung betrifft auch ein elektronisches Steuergerät zur Durchführung dieses Verfahrens.

Bei Nutzfahrzeugen, wie Lastkraftwagen, Transportern und Bussen, besteht bei einer Kurvenfahrt oder bei einer plötzlichen Ausweichbewegung, mit der zum Beispiel einem Hindernis ausgewichen werden soll, insbesondere im beladenen Zustand aufgrund des hohen Kraftfahrzeugschwerpunktes die Gefahr eines seitlichen Umkippens. Zur Vermeidung derartiger Unfälle sind bereits einige Steuerungseinrichtungen und Steuerungsverfahren entwickelt oder zumindest vorgeschlagen worden, die teilweise bereits in Nutzfahrzeugen zur Anwendung kommen.

So ist aus der DE 199 07 633 A1 sind ein Verfahren und eine Vorrichtung zur Stabilisierung eines Kraftfahrzeugs, insbesondere zur Vermeidung des Umkippens eines Kraftfahrzeugs um die Kraftfahrzeuglängsachse, bekannt. Das Verfahren sieht vor, dass eine die Querdynamik des Kraftfahrzeugs beschreibende Größe erfasst und mit einem Schwellenwert verglichen wird. Wenn die genannte Größe den Schwellenwert erreicht oder überschritten hat, wird das Kraftfahrzeug durch Bremseingriffe, Motor-Eingriffe und/oder Retarder-Eingriffe abgebremst oder auf einer vorgegebenen Fahrgeschwindigkeit gehalten. Solche Eingriffe erzeugen demnach eine Bremswirkung mittels der genannten Aggregate.

Aus der DE 199 58 221 A1 ist ein Verfahren zur Verhinderung des Umkippens eines Kraftfahrzeugs bekannt, bei dem die Querbeschleunigung des Kraftfahrzeugs mittels Drucksensoren an den Luftfedern der Kraftfahrzeugachsen und einem Querbeschleunigungssensor oder Raddrehzahlsensoren gemessen wird. Aus den Werten der ermittelten Querbeschleunigung und des Beladungszustands des Kraftfahrzeugs wird eine Grenzbeschleunigung bestimmt, bei welcher der Balgdruck der kurveninneren Luftfeder an einer Kraftfahrzeugachse auf den Umgebungsdruck abgesunken ist. Wenn die aktuelle Querbeschleunigung 75% der Grenzbeschleunigung erreicht, wird ein Warnsignal an den Fahrer ausgegeben und/oder die Fahrgeschwindigkeit des Kraftfahrzeugs automatisch durch eine Drosselung des Antriebsmotors oder eine Betätigung der Radbremsen reduziert.

Aus der DE 10 2004 017 634 A1 sind eine Vorrichtung und ein Verfahren zur Wankstabilisierung eines Kraftfahrzeugs bekannt, mit beziehungsweise bei denen mittels einer Gierratensensoreinrichtung ein kombiniertes Signal bestehend aus der Gierrate und der Wankrate des Kraftfahrzeugs erfasst wird. Durch die Aufspaltung des Signals mittels eines Kalman-Filters wird der aktuelle Wankwinkel des Kraftfahrzeugs bestimmt. Wenn der Wankwinkel einen vorbestimmten Schwellenwert überschreitet, wird ein Warnsignal an den Fahrer ausgegeben und/oder das Kraftfahrzeug durch eine Einwirkung auf die Bremsanlage automatisch abgebremst.

Außerdem ist aus der DE 10 2008 019 194 A1 ein Verfahren und eine Vorrichtung zur Stabilitätsregelung eines Kraftfahrzeugs bekannt, welche zur Durchführung eines Kippschutzregelverfahrens und eines Gierregelungsverfahrens dienen. In dem Kippschutzregelverfahren werden ein Querbeschleunigungssignal, ein Lenkwinkelsignal, ein Fahrgeschwindigkeitssignal und ein Kraftfahrzeugmassesignal erfasst. Aus dem Kraftfahrzeugmassesignal wird eine Kippgrenze des Kraftfahrzeugs bestimmt. Aus dem Lenkwinkelsignal und dem Fahrgeschwindigkeitssignal wird ein Wert für die Kippdynamik ermittelt. Abhängig von der Kippgrenze in Relation zur Kippdynamik sowie dem Querbeschleunigungssignal wird ein Kippschutzregler angesteuert, mittels dem bedarfsweise über die Betätigung der Bremsanlage und/oder über eine Drosselung des Antriebsmotors eine Abbremsung des Kraftfahrzeugs erfolgt.

DE 10 2015 009160 A1 offenbart ein Verfahren zum elektronischen Regeln einer Fahrzeugverzögerung während eines Regelungseingriffes eines Antiblockiersystems (ABS) an mindestens einem Rad des Fahrzeuges, sowie eine Vorrichtung zur Durchführung des Verfahrens.

WO 2014/012609 A1 betrifft ein Verfahren zum Abbremsen einer Kombination von mehreren miteinander gekoppelten Fahrzeugen, wobei die Fahrzeuge jeweils elektronisch gesteuerte Bremsen, insbesondere elektropneumatische Bremsen, ein Stabilitätssystem zum Erkennen einer Umkippgefahr.

WO 03/008242 A1 betrifft eine Vorrichtung zur Erkennung und Behebung einer Umkippgefahr eines mit einem Regelungssystem ausgestatteten Fahrzeuges um eine in Längsrichtung des Fahrzeuges orientierte Fahrzeugachse, wobei mit den Ausgangssignalen des Regelungsystems entsprechend den Ausgangssignalwerten Aktoren und/oder Fahrerinformationssysteme angesteuert werden und wobei mit der Vorrichtung eine die Querdynamik des Fahrzeuges beschreibende Größe ermittelt wird.

Da sich die Radlasten bei einer Kurvenfahrt oder bei einer plötzlichen Ausweichbewegung dynamisch von radial innen nach radial außen verschieben, also die kurveninneren Räder entlastet und die kurvenäußeren Räder stärker belastet werden, besteht bei einer gleichzeitigen Betätigung der Radbremsen die Gefahr, dass die kurveninneren Räder ihre Schlupfgrenze erreichen oder überschreiten. Sobald diese Gefahr elektronisch erkannt ist, wird eine Blockierschutzfunktion aktiviert, mittels welcher der Bremsdruck in den kurveninneren Radbremsen durch eine ABS-Regelung (Anti-Blockier-Schutz Regelung) zyklisch zwischen einem oberen beziehungsweise höchsten Regeldruck sowie einem unteren beziehungsweise niedrigsten Regeldruck schwankt und dadurch im zeitlichen Mittelwert abgesenkt wird. Dadurch wird im Ergebnis jedoch die Bremskraft der kurveninneren Radbremsen reduziert und das betreffende Kraftfahrzeug weniger stark abgebremst als dies von der erwähnten Kippschutzfunktion an sich vorgesehen ist. Im Extremfall kann das seitliche Umkippen des Kraftfahrzeugs somit nicht mehr verhindert werden.

Der Erfindung liegt demnach die Aufgabe zugrunde, ein Verfahren zur Steuerung einer Bremsanlage eines Kraftfahrzeugs der eingangs genannten Art vorzustellen, mit dem das Kraftfahrzeug bei einer Kurvenfahrt oder bei einer plötzlichen Ausweichbewegung bei aktivierter Blockierschutzfunktion dennoch hinreichend abgebremst wird, um ein seitliches Umkippen des Kraftfahrzeugs zu verhindern. Außerdem soll ein elektronisches Steuergerät vorgestellt werden, mit dem das erwähnte Verfahren betrieben werden kann.

Die verfahrensbezogene Aufgabe wird durch ein Verfahren mit den Merkmalen des Anspruchs 1 gelöst. Gleiches trifft für das Verfahren gemäß einem zweiten unabhängigen Anspruch zu, welches speziell an einer Bremsanlage eines Kraftfahrzeugs betreibbar ist, die mittels eines hydraulischen oder pneumatischen Druckmittels betreibbar ist. Vorteilhafte Weiterbildungen des Verfahrens sind in den jeweils zugeordneten abhängigen Ansprüchen definiert. Die Merkmale des elektronischen Steuergeräts sind in dem einzigen Vorrichtungsanspruch genannt.

Das Verfahren gemäß der Erfindung ist an allen Kraftfahrzeug-Bremsanlagen betreibbar, welche hinsichtlich einer Bremsbetätigung ansteuerbare Mittel aufweisen. So kann das Verfahren beispielsweise an Kraftfahrzeug-Bremsanlagen mit hydraulischen oder pneumatischen Bremsaktuatoren betrieben werden, aber auch an Kraftfahrzeug-Bremsanlagen mit an sich bekannten elektromagnetischen Bremsen oder Radnabenmotoren.

Demnach betrifft die Erfindung zunächst ein Verfahren zur Steuerung einer Bremsanlage eines Kraftfahrzeugs, welche von einem elektronischen Steuergerät hinsichtlich deren Betätigung steuerbare Radbremsen sowie Steuerungseinrichtungen zur Ausführung einer Blockierschutzfunktion (ABS = Anti-Blockier-Schutz Regelung)) und zur Ausführung einer Kippschutzfunktion (RSC = Rollover Stability Control) aufweist, wobei das Kraftfahrzeug bei einer Kurvenfahrt oder bei einer plötzlichen Ausweichbewegung aufgrund einer ermittelten Kippgefahr um die Kraftfahrzeuglängsachse durch eine Betätigung der Radbremsen abgebremst wird.

Zur Lösung der verfahrensbezogenen Aufgabe ist vorgesehen, dass mit dem Beginn einer ABS-Regelung der Bremskraft einer kurveninneren Radbremse mindestens einer Kraftfahrzeugachse die Bremskraft von wenigstens einer kurvenäußeren Radbremse erhöht wird, und dass die Bremskraft der wenigstens einen kurvenäußeren Radbremse mit dem Ende der ABS-Regelung wieder abgesenkt wird.

Wenn also während des Bremsvorgangs das kurveninnere Rad mindestens einer Kraftfahrzeugachse an seine Schlupfgrenze kommt und demzufolge die ABS-Regelung der Bremskraft der kurveninneren Radbremse beginnt, wird die Bremskraft von wenigstens einer kurvenäußeren Radbremse zumindest derselben Kraftfahrzeugachse erhöht und damit der Bremskraftverlust durch die ABS-Regelung der Bremskraft der kurveninneren Radbremse zumindest teilweise ausgeglichen. Dadurch wird das Kraftfahrzeug weitgehend entsprechend der Vorgabe der Kippschutzfunktion abgebremst und ein seitliches Umkippen des Kraftfahrzeugs verhindert.

Damit ein seitliches Umkippen des Kraftfahrzeugs sicher verhindert wird, wird die Erhöhung der Bremskraft der wenigstens einen kurvenäußeren Radbremse derart bemessen, dass der Bremskraftverlust der kurveninneren Radbremse durch die ABS-Regelung dadurch weitgehend ausgeglichen wird.

Hierzu ist vorgesehen, dass die mittlere Bremskraft der kurveninneren Radbremse während der ABS-Regelung ermittelt wird, und dass der Wert der Erhöhung der Bremskraft der kurvenäußeren Radbremse der Kraftdifferenz zwischen der von dem Beginn der Ausführung der Kippschutzfunktion vorgesehenen Standard-Bremskraft und der mittleren Bremskraft der kurveninneren Radbremse entspricht.

Weiter kann vorgesehen sein, dass während der ABS-Regelung die Bremskraft an der kurveninneren Radbremse eine obere Bremskraft und eine untere Bremskraft ermittelt werden, und dass die mittlere Bremskraft an der kurveninneren Radbremse als arithmetischer Mittelwert von der oberen Bremskraft und der unteren Bremskraft während der ABS-Regelung bestimmt wird.

Wie erwähnt kann das Verfahren mit den Merkmalen der Erfindung auch an einer Kraftfahrzeug-Bremsanlage betrieben werden, deren Bremsaktuatoren pneumatisch oder hydraulisch betätigbar sind. Die gemäß dem hier beschriebenen Verfahren zu steuernde Bremskraft ist bei den pneumatisch oder hydraulisch betätigbaren Bremsanlagen technisch äquivalent zur Steuerung des Drucks des Druckmittels in den direkt zu den Bremsaktuatoren führenden Leitungen. Demnach wird auch ein Verfahren zur Lösung der eingangs erwähnten Aufgabe beansprucht, welches speziell an einer pneumatischen oder hydraulischen Bremsanlage betreibbar ist.

So betrifft die Erfindung auch ein Verfahren zur Steuerung einer Bremsanlage eines Kraftfahrzeugs, welches mittels eines elektronischen Steuergeräts steuerbar ist und druckmittelbetätigbare Radbremsen sowie Steuerungseinrichtungen zur Ausführung einer Blockierschutzfunktion und zur Ausführung einer Kippschutzfunktion aufweist, wobei das Kraftfahrzeug bei einer Kurvenfahrt oder bei einer plötzlichen Ausweichbewegung aufgrund einer ermittelten Kippgefahr um die Kraftfahrzeuglängsachse durch eine Einsteuerung eines Bremsdruckes in die Radbremsen abgebremst wird.

Zur Lösung der verfahrensbezogenen Aufgabe ist hierbei vorgesehen, dass mit dem Beginn einer ABS-Regelung des Bremsdruckes p_{B_KI} der kurveninneren Radbremse mindestens einer Kraftfahrzeugachse der Bremsdruck p_{B_KA} einer kurvenäußeren Radbremse erhöht wird, und dass der Bremsdruck p_{B_KA} der wenigstens einen kurvenäußeren Radbremse mit dem Ende der ABS-Regelung wieder abgesenkt wird.

Wenn also während des Bremsvorgangs das kurveninnere Rad mindestens einer Kraftfahrzeugachse an seine Schlupfgrenze kommt und demzufolge die ABS-Regelung des Bremsdruckes p_{B_KI} der kurveninneren Radbremse beginnt, wird der Bremsdruck p_{B_KA} der kurvenäußeren Radbremse derselben oder einer anderen Kraftfahrzeugachse erhöht und damit der Bremskraftverlust durch die ABS-Regelung des Bremsdruckes p_{B_KI} der kurveninneren Radbremse zumindest teilweise ausgeglichen. Dadurch wird das Kraftfahrzeug weitgehend entsprechend der Vorgabe der Kippschutzfunktion abgebremst und ein seitliches Umkippen des Kraftfahrzeugs verhindert.

Damit ein seitliches Umkippen des Kraftfahrzeugs sicher verhindert wird, wird die Erhöhung des Bremsdruckes Δp_{B_KA} der kurvenäußeren Radbremse gemäß der Erfindung derart bemessen, dass der Bremskraftverlust der kurveninneren Radbremse durch die ABS-Regelung dadurch weitgehend ausgeglichen wird.

Hierzu ist vorgesehen, dass der mittlere Bremsdruck p_{B_R-m} der kurveninneren Radbremse während der ABS-Regelung bestimmt wird, und dass der Wert der Erhöhung des Bremsdruckes Δp_{B_KA} der kurvenäußeren Radbremse der Druckdifferenz Δp_{B_KI} zwischen dem von dem Beginn der Ausführung der Kippschutzfunktion vorgesehenen Standard-Bremsdruck p_{B_KS_Std} und dem mittleren Bremsdruck p_{B_R-m} der kurveninneren Radbremse entspricht (Δp_{B_KA} = Δp_{B_KI} = p_{B_KS_Std} - p_{B_R-m}).

Weiter kann vorgesehen sein, dass während der ABS-Regelung des Bremsdruckes p_{B_KI} an der kurveninneren Radbremse ein oberer Bremsdruck p_{B_R-o} sowie ein unterer Bremsdruck p_{B_R-u} ermittelt werden, und dass der mittlere Bremsdruck p_{B_R-m} an der kurveninneren Radbremse als arithmetischer Mittelwert von dem oberen gemessenen Bremsdruck p_{B_R-o} und dem unteren gemessenen Bremsdruck p_{B_R-u} während der ABS-Regelung bestimmt wird (p_{B_R-m} = (p_{B_R-o} + p_{B_R-u}) / 2).

Bei einer bei Lastkraftwagen und Bussen üblichen Druckluftbremsanlage mit achsweiser Zuordnung jeweils eines Relaisventils erfolgt die genannte Erhöhung des Bremsdruckes p_{B_KA} der kurvenäußeren Radbremse durch die Einstellung eines entsprechend erhöhten Bremsdruckes p_{B_KA_max} in einem zugeordneten Relaisventil der betreffenden Kraftfahrzeugachse. Hierdurch wird zwar theoretisch auch der Bremsdruck p_{B_KI} der kurveninneren Radbremse entsprechend erhöht, welches aber aufgrund der aktiven ABS-Regelung dieses Bremsdruckes keine praktische Auswirkung hat. Zusätzlich oder alternativ dazu kann auch ein Relaisventil an einer anderen Kraftfahrzeugachse in der beschriebenen Weise angesteuert werden, wenn eine kurveninnere Radbremse gerade durch eine aktive ABS-Regelung betätigt wird.

Eine letzte Weiterbildung des Verfahrens sieht vor, das mit dem Ende der ABS-Regelung, welche sich aufgrund der reduzierten Fahrgeschwindigkeit durch die Unterschreitung der Schlupfgrenze des kurveninneren Rades ergibt, der in dem Relaisventil der Kraftfahrzeugachse eingestellte Bremsdruck p_{B_KA} wieder auf den von der Kippschutzfunktion vorgesehenen Standard-Bremsdruck p_{B_KS_Std} abgesenkt wird.

Schließlich betrifft die Erfindung wie bereits erwähnt ein elektronisches Steuergerät für ein Kraftfahrzeug, welches zur Durchführung der Verfahrensschritte gemäß wenigstens einem der Verfahrensansprüche ausgebildet ist. Hierauf wird weiter unten noch detailliert eingegangen.

Das Verfahren gemäß der Erfindung wird nachstehend anhand eines in der beigefügten Zeichnung dargestellten Ausführungsbeispiels näher erläutert. In der Zeichnung zeigt
Fig. 1 einen Bremsvorgang mit einer Anwendung des erfindungsgemäßen Steuerungsverfahrens in einem Bremsdruck-Zeit-Diagramm, und
Fig. 2 eine pneumatische Bremsanlage eines Kraftfahrzeugs in einer schematischen Ansicht zur Erläuterung des erfindungsgemäßen Verfahrens.

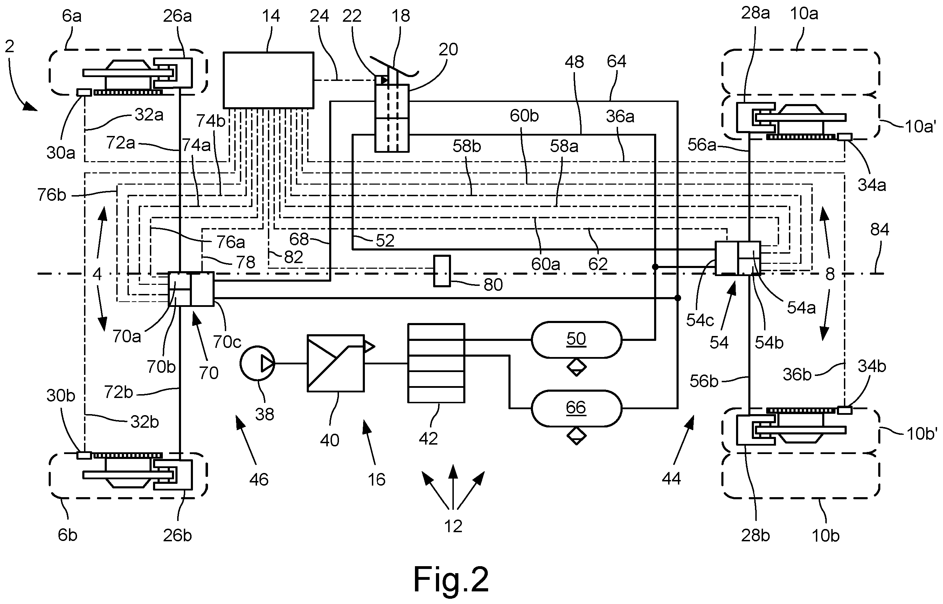

Das in Fig. 2 abgebildete Kraftfahrzeug 2, bei dem es sich um ein Nutzfahrzeug handeln soll, weist eine einfachbereifte Vorderachse 4 mit zwei Rädern 6a, 6b und eine doppeltbereifte Hinterachse 8 mit insgesamt vier Rädern 10a, 10a', 10b, 10b' auf.

Eine Bremsanlage 12 des Kraftfahrzeugs 2 ist als eine elektronisch steuerbare Druckluftbremsanlage ausgebildet. Die Bremsanlage 12 umfasst neben einem elektronischen Steuergerät 14 eine Druckluftversorgungseinrichtung 16, ein über ein Bremspedal 18 betätigbares Fußbremsventil 20 mit einem als Stellwegsensor ausgeführten Bremswertgeber 22 sowie druckmittelbetätigbare, als Reibungsbremsen ausgebildete Radbremsen 26a, 26b, 28a, 28b. Der Bremswertgeber 22 des Fußbremsventils 20 ist über eine elektrische Sensorleitung 24 mit dem Steuergerät 14 verbunden. An den Rädern 6a, 6b der Vorderachse 4 und den Radpaaren 10a, 10a'; 10b, 10b' der Hinterachse 8 ist jeweils ein Raddrehzahlsensor 30a, 30b, 34a, 34b angeordnet, welche jeweils über eine elektrische Sensorleitung 32a, 32b, 36a, 36b an das Steuergerät 14 angeschlossen sind.

Die Druckluftversorgungseinrichtung 16 weist einen Kompressor 38, einen Druckregler 40 und ein Mehrkreisschutzventil 42 auf. Von dem Kompressor 38, der von einem nicht abgebildeten Antriebsmotor antreibbar ist, wird Druckluft über den Druckregler 40 und das Mehrkreisschutzventil 42 in zwei Bremskreise 44, 46 der Bremsanlage 12 gefördert.

Der erste Bremskreis 44 weist einen ersten Druckspeicher 50 und eine erste Vorratsleitung 48 auf, welche von dem Mehrkreisschutzventil 42 zu dem Fußbremsventil 20 sowie zu einem ersten Achsventilmodul 54 an der Hinterachse 8 geführt ist. Von dem Fußbremsventil 20 verläuft eine erste Achsbremsleitung 52, in die abhängig von der Betätigung des Bremspedals 18 ein Bremsdruck eingesteuert wird, zu dem ersten Achsventilmodul 54. Das erste Achsventilmodul 54 umfasst ein erstes Relaisventil 54c und jeweils eine ABS-Ventilanordnung 54a, 54b pro Radpaar 10a, 10a'; 10b, 10b' der Hinterachse 8. Von den beiden ABS-Ventilanordnungen 54a, 54b des ersten Achsventilmoduls 54 ist jeweils eine Radbremsleitung 56a, 56b an die zugeordnete Radbremse 28a, 28b der Hinterachse 8 geführt. Die beiden hinteren ABS-Ventilanordnungen 54a, 54b umfassen jeweils ein ABS-Einlassventil und ein ABS-Auslassventil sowie einen Drucksensor (nicht dargestellt). Die ABS-Einlassventile und die ABS-Auslassventile sind jeweils über eine elektrische Steuerleitung 58a, 58b an das Steuergerät 14 angeschlossen. Die Drucksensoren sind an die jeweilige Radbremsleitung 56a, 56b pneumatisch angeschlossen und über jeweils eine elektrische Sensorleitung 60a, 60b mit dem Steuergerät 14 verbunden.

Das Relaisventil 54c des ersten Achsventilmoduls 54 wird primär in Abhängigkeit von dem über den Bremswertgeber 22 des Fußbremsventils 20 erfassten Bremswert elektronisch gesteuert. Hierzu ist das erste Relaisventil 54c über eine elektrische Steuerleitung 62 mit dem elektronischen Steuergerät 14 verbunden. Im Redundanzfall, also bei einer ausgefallenen elektronischen Steuerung, wird das Relaisventil 54c des ersten Achsventilmoduls 54 in Abhängigkeit von dem in der ersten Achsbremsleitung 52 anliegenden Bremsdruck pneumatisch gesteuert.

Der zweite Bremskreis 46 weist einen zweiten Druckspeicher 66 und eine zweite Vorratsleitung 64 auf, welche von dem Mehrkreisschutzventil 42 zu dem Fußbremsventil 20 und einem zweiten Achsventilmodul 70 an der Vorderachse 4 geführt ist. Von dem Fußbremsventil 20 verläuft eine zweite Achsbremsleitung 68, in die abhängig von der Betätigung des Bremspedals 18 ein Bremsdruck eingesteuert wird, zu dem zweiten Achsventilmodul 70. Das zweite Achsventilmodul 70 umfasst ein zweites Relaisventil 70c und jeweils eine ABS-Ventilanordnung 70a, 70b pro Rad 6a, 6b der Vorderachse 4. Von den beiden vorderen ABS-Ventilanordnungen 70a, 70b des zweiten Achsventilmoduls 70 ist jeweils eine Radbremsleitung 72a, 72b an die zugeordnete Radbremse 26a, 26b der Vorderachse 4 geführt. Die beiden vorderen ABS-Ventilanordnungen 70a, 70b umfassen jeweils ein ABS-Einlassventil und ein ABS-Auslassventil sowie einen Drucksensor (nicht dargestellt). Die beiden vorderen ABS-Einlassventile und ABS-Auslassventile sind jeweils über eine elektrische Steuerleitung 74a, 74b an das Steuergerät 14 angeschlossen. Die Drucksensoren sind an die jeweilige vorderen Radbremsleitung 72a, 72b angeschlossen und über jeweils eine elektrische Sensorleitung 76a, 76b mit dem Steuergerät 14 verbunden.

Das Relaisventil 70c des zweiten Achsventilmoduls 70 wird ebenfalls primär in Abhängigkeit des von dem Bremswertgeber 22 des Fußbremsventils 20 erfassten Bremswert elektronisch gesteuert und ist hierzu über eine elektrische Steuerleitung 78 mit dem elektronischen Steuergerät 14 verbunden. Im Redundanzfall wird das Relaisventil 70c des zweiten Achsventilmoduls 70 in Abhängigkeit des in der zweiten Achsbremsleitung 68 anliegenden Bremsdruckes pneumatisch gesteuert.

In einer Blockierschutzfunktion, welche als Steuerungsprogramm in einem Programmspeicher des Steuergerätes 14 abgespeichert ist, werden während eines Bremsvorgangs das Stellwegsignal des Bremswertgebers 22, die Drehzahlsignale der Raddrehzahlsensoren 30a, 30b, 34a, 34b und die Drucksignale der Drucksensoren der ABS-Ventileinrichtungen 54a, 54b, 70a, 70b sowie weitere Informationen, wie zum Beispiel die aktuelle Fahrgeschwindigkeit, der aktuelle Lenkwinkel und der aktuelle Beladungszustand, ausgewertet. Bei einer ermittelten Annäherung eines Rades 6a, 6b beziehungsweise eines Radpaares 10a, 10a'; 10b, 10b' an dessen Schlupfgrenze wird über die Ansteuerung des ABS-Einlassventils und des ABS-Auslassventils der betreffenden ABS-Ventilanordnung 54a, 54b, 70a, 70b der Bremsdruck in der zugeordneten Radbremse 26a, 26b, 28a, 28b in einer Art Stotterbremsung geregelt. Hierdurch wird ein Radschlupf auf der Fahrbahn vermieden.

In einer Kippschutzfunktion, welche ebenfalls als Steuerungsprogramm in dem Programmspeicher des Steuergerätes 14 abgespeichert ist, werden während einer Kurvenfahrt das Sensorsignal eines Kippsensors 80 sowie weitere Informationen, wie zum Beispiel die aktuelle Fahrgeschwindigkeit, der aktuelle Lenkwinkel und der aktuelle Beladungszustand, ausgewertet. Bei einer ermittelten Annäherung an eine Kippgrenze, deren Überschreitung zu einem Umkippen des Kraftfahrzeugs 2 um die Kraftfahrzeuglängsachse 84 führen könnte, wird das Kraftfahrzeug 2 mittels einer Ansteuerung der beiden Relaisventile 54c, 70c durch die Einsteuerung eines Bremsdruckes in die Radbremsen 26a, 26b, 28a, 28b abgebremst. Bei dem Kippsensor 80, der über eine Sensorleitung 82 an das Steuergerät 14 angeschlossen ist, kann es sich um einen Querbeschleunigungssensor oder ein Wankwinkelsensor handeln.

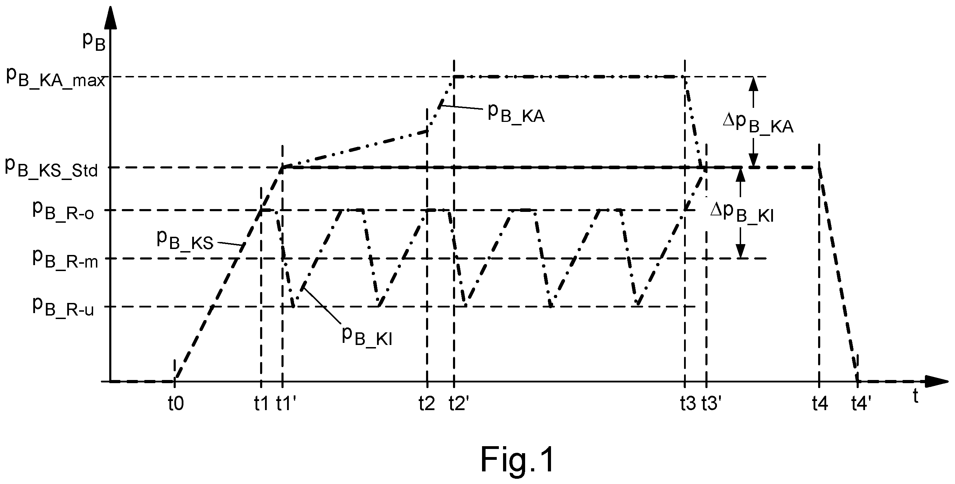

Nachfolgend wird anhand der Bremsdruckverläufe in dem Diagramm der Fig. 1 erläutert, wie das Kraftfahrzeug 2 bei einer Kurvenfahrt gemäß des erfindungsgemäßen Verfahrens in der Kippschutzfunktion abgebremst wird, wenn aufgrund der dynamischen Verlagerung der Radlasten an der kurveninneren Radbremse einer Kraftfahrzeugachse durch die Blockierschutzfunktion eine ABS-Regelung des Bremsdruckes erfolgt.

In dem Diagramm der Fig. 1 ist der theoretische Verlauf des pneumatischen Bremsdruckes p_{B_KS} beider Radbremsen einer Kraftfahrzeugachse ohne eine ABS-Regelung gestrichelt dargestellt. Der davon teilweise abweichende Verlauf des pneumatischen Bremsdruckes p_{B_KI} der kurveninneren Radbremse ist mit einer Strich-Punkt-Line und der ebenfalls davon teilweise abweichende Verlauf des pneumatischen Bremsdruckes p_{B_KA} der kurvenäußeren Radbremse mit einer Doppelpunkt-Strich-Linie dargestellt.

Unter der Annahme einer aktuell durchfahrenen Linkskurve und der Betrachtung der Bremsdrücke in den Radbremsen 26a, 26b an der Vorderachse des Kraftfahrzeugs 2 wird bei der Anwendung der Kippschutzfunktion zum Zeitpunkt t0 eine Annäherung an die Kippgrenze des Fahrzeugs 2 festgestellt. Dies führt zur Einsteuerung eines Bremsdruckes p_{B_KS} in die Radbremsen 26a, 26b der Vorderachse 4 über das zweite Relaisventil 70c. Damit das Kraftfahrzeug 2 hinreichend abgebremst wird, um ein seitliches Umkippen zu verhindern, soll der Bremsdruck p_{B_KS} auf einen vorgesehenen Standard-Bremsdruck p_{B_KS_Std} eingestellt werden und dann zunächst konstant bleiben.

Allerdings wird durch die Blockierschutzfunktion vor dem Erreichen des Standard-Bremsdruckes p_{B_KS_Std} zum Zeitpunkt t1 am kurveninneren vorderen Rad 6b eine Annäherung oder Überschreitung der Radschlupfgrenze festgestellt, welches zum Start der ABS-Regelung des Bremsdruckes p_{B_KI} der kurveninneren Radbremse 26b zwischen dem oberen Regeldruck p_{B_R-o} und dem unteren Regeldruck p_{B_R-u} führt. Der Bremsdruck p_{B_KA} der kurvenäußeren Radbremse 26a erreicht zum Zeitpunkt t1' den an sich vorgesehenen Standard-Bremsdruck p_{B_KS_Std} und wird danach durch eine entsprechende Ansteuerung des zweiten Relaisventils 70c zunächst mit relativ niedrigem Druckgradienten weiter erhöht. Zum Zeitpunkt t2 ist aus den ersten Regelzyklen der ABS-Regelung des Bremsdruckes p_{B_KI} der kurveninneren Radbremse 26b der mittlere Bremsdruck p_{B_R-m} der ABS-Regelung und dessen Druckdifferenz Δp_{B_KI} zu dem an sich vorgesehenen Standard-Bremsdruck p_{B_KS_Std} ermittelt worden. Der mittlere Bremsdruck p_{B_R-m} wird bevorzugt als arithmetischer Mittelwert von dem oberen Bremsdruck p_{B_R-o} und dem unteren Bremsdruck p_{B_R-u} während der ABS-Regelung bestimmt (p_{B_R-m} = (p_{B_R-o} + p_{B_R-u}) / 2).

Um den durch die aktuelle ABS-Regelung bewirkten Bremskraftverlust der kurveninneren Radbremse 26b im Vergleich zu der kurvenäußeren Radbremse 26a auszugleichen, ist vorgesehen, dass der Bremsdruck p_{B_KA} der kurvenäußeren Radbremse 26a auf einen maximalen Bremsdruck p_{B_KA_max} erhöht wird, welcher um dieselbe Druckdifferenz Δp_{B_KA} = Δp_{B_KI} über dem an sich vorgesehenen Standard-Bremsdruck p_{B_KS_Std} liegt (p_{B_KA_max} = p_{B_KS_Std} + Δp_{B_KA}). Daher wird der Bremsdruck P_{B_KA} der kurvenäußeren Radbremse 26a ab dem Zeitpunkt t2 mit hohem Druckgradienten weiter erhöht und erreicht zum Zeitpunkt t2' den vorgesehenen Zieldruck p_{B_KA_max}.

Aufgrund der zum Zeitpunkt t3 inzwischen reduzierten Fahrgeschwindigkeit wird durch die Blockierschutzfunktion die sichere Unterschreitung der Schlupfgrenze des kurveninneren Rades 6b festgestellt, sodass die ABS-Regelung des Bremsdruckes p_{B_KI} der kurveninneren Radbremse 26b dann beendet wird. Zugleich wird durch die Kippschutzfunktion der über das zweite Relaisventil 70c eingesteuerte Bremsdruck p_{B_KA_max} auf den ohne ABS-Regelung vorgesehenen Standard-Bremsdruck p_{B_KS_Std} abgesenkt, welcher in etwa zum Zeitpunkt t3' in beiden Radbremsen 26a, 26b der Vorderachse 4 erreicht wird. Danach besteht zum Zeitpunkt t4 aufgrund der weiter gesunkenen Fahrgeschwindigkeit des Kraftfahrzeugs 2 keine Kippgefahr mehr, sodass der Bremsdruck p_{B_KS} danach über das zweite Relaisventil 70c bis zum Zeitpunkt t4' auf den Wert Null reduziert und damit der Bremsvorgang zur Verhinderung eines seitlichen Umkippens beendet wird.

Wenn ein Kraftfahrzeug 2 bei einer Kurvenfahrt durch eine Kippschutzfunktion abgebremst wird, und dabei während einer ABS-Regelung des Bremsdruckes p_{B_KI} einer kurveninneren Radbremse 26b mindestens einer Kraftfahrzeugachse 4 der Bremsdruck p_{B_KA} der kurvenäußeren Radbremse 26a derselben oder einer anderen Kraftfahrzeugachse 4 um eine Druckdifferenz Δp_{B_KA} erhöht wird, welche weitgehend dem Druckverlust Δp_{B_KI} der kurveninneren Radbremse 26b aufgrund der ABS-Regelung entspricht, erfolgt die Abbremsung des Kraftfahrzeugs 2 in etwa mit derselben Bremskraft wie ohne eine aktive ABS-Regelung, sodass ein seitliches Umkippen des Kraftfahrzeugs 2 dadurch sicher verhindert werden kann.

### Bezugszeichenliste (Teil der Beschreibung)

- 2: Kraftfahrzeug, Nutzfahrzeug
- 4: Kraftfahrzeugachse, Vorderachse
- 6a, 6b: Räder an der Vorderachse
- 8: Kraftfahrzeugachse, Hinterachse
- 10a, 10a': Räder an der Hinterachse
- 10b, 10b': Räder an der Hinterachse
- 12: Bremsanlage, Druckluftbremsanlage
- 14: Elektronisches Steuergerät
- 16: Druckluftversorgungseinrichtung
- 18: Bremspedal
- 20: Fußbremsventil
- 22: Bremswertgeber, Stellwegsensor
- 24: Sensorleitung
- 26a, 26b: Radbremsen, Reibungsbremsen an der Vorderachse
- 28a, 28b: Radbremsen, Reibungsbremsen an der Hinterachse
- 30a, 30b: Raddrehzahlsensoren an der Vorderachse
- 32a, 32b: Sensorleitungen
- 34a, 34b: Raddrehzahlsensoren an der Hinterachse
- 36a, 36b: Sensorleitungen
- 38: Kompressor
- 40: Druckregler
- 42: Mehrkreisschutzventil
- 44: Erster Bremskreis
- 46: Zweiter Bremskreis
- 48: Erste Vorratsleitung
- 50: Erster Druckspeicher
- 52: Erste Achsbremsleitung
- 54: Erstes Achsventilmodul
- 54a, 54b: ABS-Ventilanordnungen
- 54c: Erstes Relaisventil
- 56a, 56b: Radbremsleitungen an der Hinterachse
- 58a, 58b: Steuerleitungen
- 60a, 60b: Sensorleitungen
- 62: Steuerleitung
- 64: Zweite Vorratsleitung
- 66: Zweiter Druckspeicher
- 68: Zweite Achsbremsleitung
- 70: Zweites Achsventilmodul
- 70a, 70b: ABS-Ventilanordnungen
- 70c: Zweites Relaisventil
- 72a, 72b: Radbremsleitungen an der Vorderachse
- 74a, 74b: Steuerleitungen
- 76a, 76b: Sensorleitungen
- 78: Steuerleitung
- 80: Kippsensor, Querbeschleunigungssensor, Wankwinkelsensor
- 82: Sensorleitung
- 84: Kraftfahrzeuglängsachse
- ABS: Antiblockiersystem
- p_{B}: Bremsdruck; Bremskraft
- p_{B_KA}: Bremsdruck (Bremskraft) an der kurvenäußeren Radbremse
- p_{B_KA_max}: Maximaler Bremsdruck (Bremskraft) an der kurvenäußeren Radbremse
- p_{B_KI}: Bremsdruck (Bremskraft) an der kurveninneren Radbremse
- p_{B_KS}: Bremsdruck (Bremskraft) der Kippschutzfunktion
- p_{B_KS_Std}: Standard-Bremsdruck (Standard- Bremskraft) der Kippschutzfunktion
- p_{B_R-m}: Mittlerer Bremsdruck (Bremskraft) der ABS-Regelung
- p_{B_R-o}: Oberer Bremsdruck (Bremskraft) der ABS-Regelung
- p_{B_R-u}: Unterer Bremsdruck (Bremskraft) der ABS-Regelung
- RSC: Rollover Stability Control
- t: Zeit
- t0: Zeitpunkt
- t1, t1': Zeitpunkte
- t2, t2': Zeitpunkte
- t3, t3': Zeitpunkte
- t4, t4': Zeitpunkte

## Patentansprüche

1. Verfahren zur Steuerung einer Bremsanlage (12) eines Kraftfahrzeugs (2), welche von einem elektronischen Steuergerät (14) hinsichtlich deren Betätigung steuerbare oder druckmittelbetätigbare Radbremsen (26a, 26b, 28a, 28b) sowie Steuerungseinrichtungen zur Ausführung einer Blockierschutzfunktion (ABS) und zur Ausführung einer Kippschutzfunktion (RSC) aufweist, wobei das Kraftfahrzeug (2) bei einer Kurvenfahrt oder bei einer plötzlichen Ausweichbewegung aufgrund einer ermittelten Kippgefahr um die Kraftfahrzeuglängsachse (84) durch eine Betätigung der Radbremsen (26a, 26b, 28a, 28b) oder durch eine Einsteuerung eines Bremsdruckes in die Radbremsen (26a, 26b, 28a, 28b) abgebremst wird, wobei mit dem Beginn (t1) einer ABS-Regelung der Bremskraft (p_{B_KA}) einer kurveninneren Radbremse (26b; 28b) mindestens einer Kraftfahrzeugachse (4; 8) die Bremskraft (p_{B_KA}) von wenigstens einer kurvenäußeren Radbremse (26a; 28a) erhöht wird, wobei die Bremskraft (p_{B_KA}) der wenigstens einen kurvenäußeren Radbremse (26a; 28b) mit dem Ende der ABS-Regelung (t3) wieder abgesenkt wird, wobei die Erhöhung der Bremskraft (Δp_{B_KA}) oder des Bremsdruckes (Δp_{B_KA}) der wenigstens einen kurvenäußeren Radbremse (26a; 28a) derart bemessen ist, so dass der Bremskraftverlust der kurveninneren Radbremse (26b; 28b) durch die ABS-Regelung dadurch weitgehend ausgeglichen wird, **dadurch gekennzeichnet, dass** die mittlere Bremskraft (p_{B_R-m}) der kurveninneren Radbremse (26b; 28b) oder der mittlere Bremsdruck (p_{B_R-m}) der kurveninneren Radbremse (26b; 28b) während der ABS-Regelung bestimmt wird, und dass der Wert der Erhöhung der Bremskraft (Δp_{B_KA}) der kurvenäußeren Radbremse (26a; 28a) der Kraftdifferenz (Δp_{B_KI}) zwischen der von dem Beginn der Ausführung der Kippschutzfunktion vorgesehenen Standard-Bremskraft (p_{B_KS_Std}) und der mittleren Bremskraft (p_{B_R-m}) der kurveninneren Radbremse (26b) entspricht (Δp_{B_KA} = Δp_{B_KI} = p_{B_KS_Std} - p_{B_R-m}) oder der Wert der Erhöhung des Bremsdruckes (Δp_{B_KA}) der kurvenäußeren Radbremse (26a; 28a) der Druckdifferenz (Δp_{B_KI}) zwischen dem von dem Beginn der Ausführung der Kippschutzfunktion vorgesehenen Standard-Bremsdruck (p_{B_KS_Std}) und dem mittleren Bremsdruck (p_{B_R-m}) der kurveninneren Radbremse entspricht ((Δp_{B_KA} = Δ_{PB_KI} = p_{B_KS_Std} - p_{B_R-m}).

2. Verfahren nach Anspruch 1, **dadurch gekennzeichnet, dass** während der ABS-Regelung die Bremskraft (p_{B_KI}) oder der Bremsdruck (p_{B_KI}) an der kurveninneren Radbremse (26b; 28b) eine obere Bremskraft (p_{B_R-o}) oder ein oberer Bremsdruck (p_{B_R-o}) und eine untere Bremskraft (p_{B_R-u}) oder ein unterer Bremsdruck (p_{B_R-u}) ermittelt werden, und dass die mittlere Bremskraft (p_{B_R-m}) oder der mittlere Bremsdruck (p_{B_R-m}) an der kurveninneren Radbremse (26b; 28b) als arithmetischer Mittelwert von der oberen Bremskraft (p_{B_R-o}) oder von dem oberen Bremsdruck (p_{B_R-o}) und der unteren Bremskraft (p_{B_R-u}) oder dem unteren Bremsdruck (p_{B_R-u}) während der ABS-Regelung bestimmt wird (p_{B_R-m} = (P_{B_R-o} + p_{B_R-u}) / 2).

3. Verfahren nach Anspruch 1 oder 2, **dadurch gekennzeichnet, dass** die Erhöhung des Bremsdruckes (p_{B_KA}) der kurvenäußeren Radbremse (26a; 28a) durch die Einstellung eines entsprechend erhöhten Bremsdruckes (p_{B_KA_max}) in einem der betreffenden Kraftfahrzeugachse (4; 8) zugeordneten Relaisventil (70c; 54c) erfolgt.

4. Verfahren nach einem der Ansprüche 1 bis 3, **dadurch gekennzeichnet, dass** der in dem Relaisventil (70c; 54c) der Kraftfahrzeugachse (4; 8) eingestellte Bremsdruck (p_{B_KA}) mit dem Ende der ABS-Regelung wieder auf den von der Kippschutzfunktion vorgesehenen Standard-Bremsdruck (p_{B_KS_Std}) abgesenkt wird.

5. Elektronisches Steuergerät (14) für ein Kraftfahrzeug (2), welches zur Durchführung der Verfahrensschritte gemäß wenigstens einem der Verfahrensansprüche 1 bis 4 ausgebildet ist.

## Claims

1. Method for controlling a brake system (12) of a motor vehicle (2), which brake system comprises wheel brakes (26a, 26b, 28a, 28b), which, with regard to their actuation, are controllable by an electronic control unit (14) or can be actuated by a pressure medium, and control devices for executing an anti-lock braking function (ABS) and for executing an anti-roll function (RSC), the motor vehicle (2) being braked during cornering or during a sudden evasive maneuver due to a detected risk of rolling about the motor vehicle longitudinal axis (84) by actuating the wheel brakes (26a, 26b, 28a, 28b) or by directing brake pressure into the wheel brakes (26a, 26b, 28a, 28b), the brake force (p_{B_KA}) of at least one wheel brake (26a; 28a) on the outside of the curve being increased at the start (t1) of the ABS control of the brake force (p_{B_KA}) of a wheel brake (26b; 28b), on the inside of the curve, of at least one motor vehicle axle (4; 8), the brake force (p_{B_KA}) of the at least one wheel brake (26a; 28b) on the outside of the curve being lowered again at the end of the ABS control (t3), the increase in brake force (Δp_{B_KA}) or the brake pressure (Δp_{B_KA}) of the at least one wheel brake (26a; 28a) on the outside of the curve being rated in such a way that the loss of brake force of the wheel brake (26b; 28b) on the inside of the curve is largely compensated for by the ABS control, **characterized in that** the average brake force (p_{B_R-m}) of the wheel brake (26b; 28b) on the inside of the curve or the average brake pressure (p_{B_R-m}) of the wheel brake (26b; 28b) on the inside of the curve is determined during ABS control, **and in that** the value of the increase in brake force (Δp_{B_KA}) of the wheel brake (26a; 28a) on the outside of the curve corresponds to the force difference (Δp_{B_KI}) between the standard brake force (p_{B_KS_Std}) provided by the start of the execution of the anti-roll protection function and the average brake force (p_{B_R-m}) of the wheel brake (26b) on the inside of the curve (Δp_{B_KA} = Δp_{B_KI} = p_{B_KS_Std} - p_{B_R-m}) or the value of the increase in brake pressure (Δp_{B_KA}) of the wheel brake (26a; 28a) on the outside of the curve corresponds to the pressure difference (Δp_{B_KI}) between the standard brake pressure (p_{B_KS_Std}) provided by the start of the execution of the anti-roll protection function and the average brake pressure (p_{B_R-m}) of the wheel brake on the inside of the curve ((Δp_{B_KA} = Δp_{B_KI} = p_{B_KS_Std} - p_{B_R-m}).

2. Method according to claim 1, **characterized in that** the brake force (P_{B_KI}) or the brake pressure (p_{B_KI}) at the wheel brake (26b; 28b) on the inside of the curve, an upper brake force (p_{B_R-o}) or an upper brake pressure (P_{B_R-o}), and a lower brake force (p_{B_R-u}) or a lower brake pressure (p_{B_R-u}) are detected during the ABS control, **and in that** the average brake force (p_{B_R-m}) or the average brake pressure (p_{B_R-m}) at the wheel brake (26b; 28b) on the inside of the curve is determined during the ABS control as the arithmetic average of the upper brake force (p_{B_R-o}) or the upper brake pressure (p_{B_R-o}) and the lower brake force (p_{B_R-u}) or the lower brake pressure (p_{B_R-u}) (p_{B_R-m} = (p_{B_R-o} + p_{B_R-u}) / 2).

3. Method according to claim 1 or 2, **characterized in that** the brake pressure (p_{B_KA}) of the wheel brake (26a; 28a) on the outside of the curve is increased by setting a correspondingly increased brake pressure (p_{B_KA_max}) in a relay valve (70c; 54c) assigned to the relevant motor vehicle axle (4; 8).

4. Method according to any of claims 1 to 3, **characterized in that,** at the end of the ABS control, the brake pressure (p_{B_KA}) set in the relay valve (70c; 54c) of the motor vehicle axle (4; 8) is lowered back to the standard brake pressure (p_{B_KS_Std}) provided by the anti-roll function.

5. Electronic control unit (14) for a motor vehicle (2), which is designed to carry out the method steps according to at least one of method claims 1 to 4.

## Revendications

1. Procédé pour la commande d'un système de freinage (12) d'un véhicule automobile (2) qui présente des freins de roue (26a, 26b, 28a, 28b) pouvant être commandés par un appareil de commande électronique (14) en ce qui concerne leur actionnement ou pouvant être actionnés par un fluide sous pression, ainsi que des dispositifs de commande pour l'exécution d'une fonction antiblocage (ABS) et pour l'exécution d'une fonction antibasculement (RSC), dans lequel le véhicule automobile (2) est freiné par un actionnement des freins de roue (26a, 26b, 28a, 28b) ou par une commande d'une pression de freinage dans les freins de roue (26a, 26b, 28a, 28b) lors d'un trajet de virage ou lors d'un mouvement d'évitement soudain en raison d'un risque de basculement déterminé autour de l'axe longitudinal de véhicule automobile (84), dans lequel la force de freinage (p_{B_KA}) d'au moins un frein de roue extérieur au virage (26a ; 28a) d'au moins un essieu de véhicule automobile (4 ; 8) est augmentée au début (t1) d'une régulation ABS de la force de freinage (p_{B_KA}) d'un frein de roue intérieur au virage (26b ; 28b), dans lequel la force de freinage (p_{B_KA}) de l'au moins un frein de roue extérieur au virage (26a ; 28b) est à nouveau réduite à la fin (t3) de la régulation ABS, dans lequel l'augmentation de la force de freinage (Δp_{B_KA}) ou de la pression de freinage (Δp_{B_KA}) de l'au moins un frein de roue extérieur au virage (26a ; 28a) est dimensionnée de telle sorte que la perte de force de freinage du frein de roue intérieur au virage (26b ; 28b) est ainsi largement compensée par la régulation ABS, **caractérisé en ce que** la force de freinage moyenne (p_{B_R-m}) du frein de roue intérieur au virage (26b ; 28b) ou la pression de freinage moyenne (p_{B_R-m}) du frein de roue intérieur au virage (26b ; 28b) est déterminée pendant la régulation ABS, **et en ce que** la valeur de l'augmentation de la force de freinage (Δp_{B_KA}) du frein de roue extérieur au virage (26a ; 28a) correspond à la différence de force (Δp_{B_KI}) entre la force de freinage standard (p_{B_KS_Std}) prévue par le début de l'exécution de la fonction antibasculement et la force de freinage moyenne (p_{B_R-m}) du frein de roue intérieur au virage (26b) (Δp_{B_KA} = Δp_{B_KI} = p_{B_KS_Std} - p_{B_R-m}), ou la valeur de l'augmentation de la pression de freinage (Δp_{B_KA}) du frein de roue extérieur au virage (26a ; 28a) correspond à la différence de pression (Δp_{B_KI}) entre la pression de freinage standard (p_{B_KS_Std}) prévue par le début de l'exécution de la fonction antibasculement et la pression de freinage moyenne (p_{B_R-m}) du frein de roue intérieur au virage (Δp_{B_KA} = Δp_{B_KI} = p_{B_KS_Std} - p_{B_R-m}).

2. Procédé selon la revendication 1, **caractérisé en ce que,** pendant la régulation ABS, la force de freinage (p_{B_KI}), au niveau du frein de roue intérieur au virage (26b ; 28b), ou la pression de freinage (p_{B_KI}), déterminent une force de freinage supérieure (p_{B_R-o}) ou une pression de freinage supérieure (p_{B_R-o}) et une force de freinage inférieure (p_{B_R-u}) ou une pression de freinage inférieure (p_{B_R-u}), **et en ce que** la force de freinage moyenne (p_{B_R-m}) ou la pression de freinage moyenne (p_{B_R-m}) au niveau du frein de roue intérieur au virage (26b ; 28b) est déterminée comme la valeur moyenne arithmétique de la force de freinage supérieure (p_{B_R-o}) ou de la pression de freinage supérieure (p_{B_R-o}) et de la force de freinage inférieure (p_{B_R-u}) ou de la pression de freinage inférieure (p_{B_R-u}) pendant la régulation ABS (p_{B_R-m} = (p_{B_R-o} + p_{B_R-u}) / 2).

3. Procédé selon la revendication 1 ou 2, **caractérisé en ce que** l'augmentation de la pression de freinage (p_{B_KA}) du frein de roue extérieur au virage (26a ; 28a) est effectuée par le réglage d'une pression de freinage (p_{B_KA_max}) augmentée de manière correspondante dans une soupape relais (70c ; 54c) associée à l'essieu de véhicule automobile (4 ; 8) concerné.

4. Procédé selon l'une des revendications 1 à 3, **caractérisé en ce que** la pression de freinage (p_{B_KA}) réglée dans la soupape relais (70c ; 54c) de l'essieu de véhicule automobile (4 ; 8) est à nouveau réduite à la fin de la régulation ABS à la pression de freinage standard (p_{B_KS_Std}) prévue par la fonction antibasculement.

5. Appareil de commande électronique (14) pour un véhicule automobile (2) qui est configuré pour exécuter les étapes de procédé selon au moins l'une des revendications de procédé 1 à 4.
